# EUROPEAN PATENT SPECIFICATION

(11) **EP 2 024 458 B1**
(45) Date of publication and mention of the grant of the patent: **13.07.2016**
(21) Application number: 07748535.7
(22) Date of filing: 30.05.2007
(51) Int. Cl.: C09J 189/00, C08L 39/02, C08L 89/00, C08L 97/02

(54) **ADHESIVE SYSTEM**
KLEBSTOFFSYSTEM
SYSTÈME ADHÉSIF

(30) Priority: 01.06.2006 EP 06114844
(43) Date of publication of application: 18.02.2009
(73) Proprietor: Akzo Nobel Coatings International BV, 6800 SB Arnhem (NL)
(72) Inventor: KHABBAZ, Farideh, S-131 42 Nacka (SE)
(74) Representative: Akzo Nobel IP Department
(86) International application number: PCT/SE2007/050374
(87) International publication number: WO 2007/139501

(56) References cited:
- EP-A- 0 878 133
- WO-A-2005/113700
- WO-A2-2005/072260
- US-A1- 2003 155 071
- US-A1- 2005 261 404
- US-B1- 6 497 729

## Description

The present invention relates to an adhesive system and a method of producing a wood based product.

### Introduction

Formaldehyde based resins such as phenol-formaldehyde resin, melamine-formaldehyde resin and urea-formaldehyde resin are widely used as binders in the production of wood based products. Examples of such wood based products are composite products comprising layers glued together such as plywood, laminated flooring products, veneered flooring and other veneered products used in, e.g., furniture. Further examples are board products such as particle-, chip- and fibreboards wherein wood chips and/or fibres, together with a binder, are pressed to form a board.

Upon curing a formaldehyde based resin, formaldehyde may be released both during the manufacture of the wood based product and also later during use of the product. Formaldehyde emission to indoor air is a major concern since many years for health reasons.

There is an increasing demand for formaldehyde-free wood adhesives which give sufficient bond strength and overall end-product quality making them suitable as alternatives to prior art adhesives containing formaldehyde based resins.

Water resistance and bond strength are generally important properties reflecting quality for the wood based products. Generally there exist specific quality parameters required for meeting an established standard for a specific end-product. For example, a particle board needs to meet certain standards in terms of, e.g., internal bonding, thickness swelling and water absorption, while a laminated flooring product needs to meet certain standards in terms of, e.g., delamination.

Protein based adhesives were used in the production of plywood many decades ago but were replaced by formaldehyde based resins due to their superior performance. Recently, there have been proposed different types of protein-based adhesives. WO 2005/113700 A1, US 2004/0037906 and US 2004/0089418 disclose adhesive compositions based on soy protein. A further example of a protein based adhesive is disclosed in Li et al., "Soy-based adhesives with 1,3-dichloro-2-propanol as a curing agent", Wood and Fiber Science, 36(2), 2004, pp. 186-194. US 2002/0005251 discloses an adhesive based on soy protein isolate. US 2005/0166796 discloses an adhesive composition comprising soy protein isolate. US 6,790,271 and US 2005/0234156 disclose adhesive compositions comprising soy protein isolate used for forming a particle board.

However, there is still a need for an alternative protein based wood adhesive which gives high bond strength and high product quality.

Accordingly, the present invention provides a protein based adhesive composition which gives excellent gluing strength and product quality in terms of, e.g. water resistance. Also, a method of producing wood based products is provided.

### The invention

The present invention provides an adhesive system comprising a protein and one or more polymers (P) containing primary, secondary or tertiary amino groups or pendant amide groups, belonging to the group of polyvinyl amine, poly(vinylalcohol- co-vinylamine), poly(vinylalcohol- co-vinylformamide), polyallyl amine, polyethylene imine and polyvinyl formamide.

By the term "amide groups" is herein also included formamide groups.

The -NH- structure as part of an amide group, or formamide group, is herein not to be seen as an amino group.

By "adhesive system" is herein meant a combination of two or more components which forms, and functions as, a wood adhesive. In the term "adhesive" is herein also included the term "binder".

The present invention also relates to a method of producing a wood based product comprising providing an adhesive system, comprising a protein one or more vinyl polymers (P) belonging to the group of polyvinyl amine, poly(vinylalcohol- co-vinylamine), poly(vinylalcohol- co-vinylformamide), polyallyl amine, polyethylene imine and polyvinyl formamide, onto one or more pieces of a wood-based material and joining the pieces with one or more pieces of a material, preferably wood based material.

The wood based material comprises a wooden material which can be in any form such as a sheet, a lamella, a wood chip or a wood particle.

The weight ratio protein to polymers (P) is suitably from about 1:2 to about 100:1, preferably from about 1:1 to about 20:1, most preferably from about 2:1 to about 10:1.

In one embodiment, the adhesive system comprises an adhesive composition.

The adhesive composition suitably comprises from about 1 to about 99 weight % of protein, preferably from about 3 to about 75 weight %, most preferably from about 5 to about 50 weight %. The adhesive composition is preferably an aqueous composition.

The adhesive composition suitably comprises from about 0.1 to about 99 weight % of the one or more polymers (P), preferably from about 1 to about 80 weight %, more preferably 2 to about 50 weight %, even more preferably from about 2 to about 25 weight %, most preferably from about 5 to about 15 weight %.

The solids content in the adhesive composition is suitably from about 10 to about 95 weight %, preferably from about 20 to about 75 weight %, most preferably from about 30 to about 50 weight %.

In one embodiment, the adhesive system comprises the protein and the one or more polymers (P) as separate components, which preferably remain separated until their actual use in the gluing process. The separate components of the adhesive system may also be mixed a short time before the actual use in the gluing process, thereby forming an adhesive composition of the present invention. By "short time" is herein suitably meant less than about 1 hour, preferably less than about 30 minutes, most preferably less than about 15 minutes.

In one embodiment of the method of the invention, the adhesive system is provided onto one or more pieces of a wood-based material as separate components, wherein one component comprises the protein and another component comprises the one or more polymers (P).

The component comprising protein may comprise a protein solution or dispersion, or comprise the protein as a dry material. The protein solution or dispersion is preferably aqueous. The component comprising the one or more polymers (P) is suitably a solution or dispersion, preferably an aqueous solution or dispersion, or as a solid material. As a separate component of the adhesive system, the polymer (P) is suitably present in an aqueous composition comprising from about 0.1 to about 99 weight % of polymer (P), preferably from about 1 to about 80 weight %, more preferably from about 2 to about 50 weight %, even more preferably from about 2 to about 25 weight %, most preferably from about 3 to about 15 weight %.

The aqueous composition comprising the one or more polymers (P) may further comprise inorganic- or organic salts. A part of the one or more polymers (P) may be ionically charged, preferably cationically charged. The amount of negative counter-ions of the salts in the aqueous composition is suitably from 0 to about 50 weight %, preferably from about 1 to about 30 weight %, most preferably from about 2 to about 20 weight %.

When provided as separate components of the adhesive system onto the one or more pieces of wood-based material, there is preferably a sequential application of components of the adhesive system comprising a first component applied and a second component applied.

In one embodiment of the method of the invention, the first component applied comprises a protein, either as a solution or dispersion, or as a dry material, and the second component applied comprises a solution or dispersion of the one or more polymers (P).

In one embodiment of the method of the invention, the first component applied comprises a solution or dispersion of the one or more polymers (P) and the second component applied comprises a protein, either as a solution or dispersion, or as a dry material.

In one embodiment of the method of the invention, the first applied component being a solution or dispersion is dried after application before the second component is applied. In this case, the first applied component is preferably a solution or dispersion of the one or more polymers (P).

Suitably, no compound, the protein is not to be considered, comprising any thiol or phenolic hydroxyl functional groups is comprised in the adhesive system.

No additional non-polymeric component intended to act as a curing agent is suitably present in the adhesive system.

Examples of suitable proteins are native proteins and modified proteins originating from, e.g., milk (casein), soy, potato, corn, wheat, rice, peas etc.. Examples of suitable soy protein products include soy protein concentrate, soy meal, soy protein hydrolysate and soy protein isolate. Preferably, the protein is a soy protein isolate (SPI). The protein is suitably provided for use in the present invention in the form of a product such as a protein meal or a protein isolate. The protein content in the protein meal or protein isolate is suitably from about 30 to about 100 weight %, preferably from about 50 to about 100 weight %, most preferably from about 70 to about 100 weight %.

The protein has suitably not been modified with any phenolic hydroxyl donating compound.

An aqueous composition comprising 12 weight % of the protein has suitably a viscosity (Brookfield, 12 rpm, spindle 4, at 20°C) of from about 500 to about 5.000.000 mPa*s, preferably from about 1.000 to about 2.000.000 mPa*s, more preferably from about 50.000 to about 1.500.000 mPa*s. most preferably from about 100.000 to about 1.000.000 mPa*s.

The one or more polymers (P) have suitably a weight average molecular weight of from about 1.000 to about 5.000.000 g/mol, preferably from about 10.000 to about 2000.000 g/mol.

In one embodiment of the invention, suitably from about 5 to about 100 % of the monomer units in the one or more polymers (P) contain an amino group or pendant amide group, preferably from about 25 to about 100 %, more preferably from about 50 to about 100 %, even more preferably from about 90 to about 100 %. Most preferably all of the monomer units in the one or more polymers (P) contain an amino group or a pendant amide group.

In one embodiment, the one or more polymers (P) suitably belong to the group of vinyl polymers. In such a case, the one or more polymers (P) preferably belong to the group of polyvinyl amine, poly(vinylalcohol-co-vinylamine), poly(vinylalcohol-co-vinylformamide), polyallyl amine, and polyvinyl formamide. More preferably the one or more vinyl polymers (P) contain a primary amine group. Most preferably vinyl polymer (P) is polyvinyl amine.

In one embodiment, the one or more polymers (P) suitably contain primary amino groups or pendant amide groups. Most preferably polymer (P) is polyvinyl amine or polyethylene imine.

The amino groups in the one or more polymers (P) are suitably present in acyclic structures.

Polyvinyl amine is usually made by hydrolysing polyvinyl formamide to a certain degree. By "polyvinyl amine" is herein meant a polyvinyl amine wherein the mole ratio of amine groups to formamide groups is from 5:95 to 100:0. If the mole ratio of amine groups to formamide groups is less than 5:95 the polymer is defined as a polyvinyl formamide. The mole ratio of amine groups to formamide groups in the polyvinyl amine is preferably from about 10:90 to about 100:0, more preferably from about 50:50 to about 100:0, most preferably from about 80:20 to about 100:0.

Poly(vinyl alcohol-co-vinyl amine) is usually made by co-polymerising vinyl acetate and vinyl formamide followed by hydrolysis which gives a co-polymer having vinyl alcohol and vinyl amine units. There may also be remaining formamide groups in the co-polymer and also remaining acetate groups. The mole ratio of amine groups to formamide groups in the poly(vinyl alcohol-co-vinyl amine) is from 5:95 to 100:0. If the number ratio of amine groups to formamide groups is less than 5:95 the polymer is defined as a poly(vinyl alcohol-co-vinyl formamide). The mole ratio of hydroxyl groups to acetate groups in the poly(vinyl alcohol-co-vinyl amine) or poly(vinyl alcohol-co-vinyl amide) is suitably from about 25:75 to 100:0, preferably from about 75:25 to 100:0. The mole ratio of amine and formamide groups to hydroxyl and acetate groups in the poly(vinyl alcohol-co-vinyl formamine) or poly(vinyl alcohol-co-vinyl formamide) is suitably from about 3:97 to about 100:0, preferably from about 10:90 to about 100:0, most preferably from about 25:75 to about 100:0.

The one or more polymers (P) have suitably a weight average molecular weight of from about 1.000 to about 5.000.000 g/mol, preferably from about 10.000 to about 2000.000 g/mol.

The adhesive system suitably further comprises one or more polymers (P1) containing acetoacetoxy groups, preferably as a separate component or as mixed with the protein component. The content of acetoacetoxy groups in the one or more polymers (P) is suitably from about 0.05 to about 15 mole%, preferably from about 1 to about 10 mole %. The one or more polymers (P1) preferably comprise acetoacetylated polyvinyl alcohol (AAPVA).

The one or more polymers (P1) suitably have a weight average molecular weight of from about 1.000 to about 5.000.000 g/mol, preferably from about 10.000 to about 2000.000 g/mol.

As a separate component of the adhesive system, the polymer (P1) is suitably present in an aqueous composition comprising from about 0.1 to about 99 weight % of polymer (P1), preferably from about 1 to about 80 weight, more preferably from about 2 to about 50 weight %, even more preferably from about 2 to about 25 weight %, most preferably from about 3 to about 15 weight %.

The one or more components of the adhesive system comprising protein, polymer (P) and optionally polymer (P1) respectively, or the adhesive composition comprising protein and polymer (P), and optionally polymer (P1), may further comprise additives and fillers such as kaolin.

In one embodiment of the method the adhesive composition is dried after application and later activated by adding water or an aqueous composition comprising the one or more polymers (P) or an aqueous composition comprising one or more polymers (P1).

In one embodiment the adhesive system comprises the protein, the one or more polymers (P) and the one or more polymers (P1) as separate components which remain separated until their actual use in the gluing process. The separate components of the adhesive system may also be mixed a short time before the actual use in the gluing process, thereby forming an adhesive composition of the present invention. By "short time" is herein suitably meant less than about 1 hour, preferably less than about 30 minutes, most preferably less than about 15 minutes.

In one embodiment of the method of the invention, the adhesive system is applied onto one or more pieces of a wood-based material as separate components, wherein one component comprises the protein, a further component comprises the one or more polymers (P), and a further component comprises the one or more polymers (P1). The component comprising protein may comprise a protein solution or dispersion, or comprise the protein as a dry material. The component comprising the one or more polymers (P) is suitably a solution or dispersion. The component comprising the one or more polymers (P1) is suitably a solution or dispersion.

In one embodiment of the method a first component applied comprises a solution or dispersion of the protein and the one or more polymers (P), which is dried before application of a second component which comprises a solution or dispersion of the one or more polymers (P1).

In one embodiment of the method a first component applied comprises a solution or dispersion of the protein and the one or more polymers (P1), which is dried before application of a second component which comprises a solution or dispersion of the one or more polymers (P).

In one embodiment of the method a first component applied comprises a solution or dispersion of the one or more polymers (P), which is dried before application of a second component which comprises a solution or dispersion of the protein and the one or more polymers (P1).

In one embodiment of the method a first component applied comprises a solution or dispersion of the one or more polymers (P1), which is dried before application of a second component which comprises a solution or dispersion of the protein and the one or more polymers (P).

The amount of protein and one or more polymers (P) and the optional one or more polymers (P1) in the adhesive composition suitably make up at least 75 weight % of components having a molecular weight equal to or above 1000 g/mole, also suitably from about 75 to about 100 weight %, preferably at least 85 weight %, also preferably from about 85 to about 100 weight %, most preferably at least 95 weight %, also most preferably from about 95 to about 100 weight %.

The invention further relates to the use of the adhesive system according to the invention for gluing pieces of wood based materials forming a wood based product.

In one embodiment of the present invention, the pieces of wood based material are sheets or lamellas. In this case, the wood based product is suitably a laminated flooring material, veneered flooring, a veneered furniture material, plywood, a wall panel, a roofing panel or a laminated beam.

In one embodiment of the present invention, the pieces of wood based material are wood chips or wood particles, such as chips, shavings, flakes, sawdust and any similar finely divided wood based material. In this case the wood based product is suitably a chip-, particle- or fibre board, or a oriented strand board.

The moisture content of the wood particles to be used in the present invention is suitably from about 0 to about 20 weight %, preferably from about 1 to about 10 weight %, more preferably from about 1.5 to about 5 weight %.

The weight ratio wood particles to adhesive system, calculated as dry weight, is suitably from about 100:1 to about 1:1, preferably from about 50:1 to about 2:1, more preferably from about 30:1 to about 2.5:1, most preferably from about 15:1 to about 3:1.

The methods according to the invention suitably comprises the steps of contacting one or more pieces of wood based material with the adhesive system according to the invention, pressing and thereby joining pieces of wood based material with further wood based material. The pressing suitably takes place at an elevated temperature. The wood based material can be any type and form of wood based material such as chips, fibres, sheets, laminas, veneers, pieces etc. The method suitably comprises application of the adhesive composition according to the invention onto a surface of the wood based material followed by pressing. The pressing temperature depends on which wood based product intended to be manufactured but is suitably from about 50 to about 250 °C and preferably from about 70 to about 200°C. For particle-, chip-, and fibreboard products, the pressing temperature is preferably from about 100 to about 225 °C, most preferably from about 150 to about 200°C. For laminated products, such as plywood, laminated flooring or veneered flooring products, the pressing temperature is preferably from about 70 to about 175 °C, most preferably from about 90 to about 160°C.

The pressing time and pressing temperature are linked so that lower pressing temperatures generally require longer pressing times. The wood based product to be produced does also determine suitable pressing temperatures and pressing times. The pressing time is suitably at least about 10 s , also suitably from about 10 s to about 60 minutes, preferably at least about 30 s, also preferably from about 30 s to about 30 minutes, most preferably at least about 1 minute, also preferably from about 1 to about 15 minutes.

In one embodiment, when manufacturing laminated products, the method suitably comprises application of the adhesive composition according to the invention onto a surface so that the glue joint will comprise an originally applied amount of from about 0.1 to about 500 g/m². The applied amount depends on the product to be produced: for compression moulded veneers it is preferably from about 50 to about 200 g/m², for laminated flooring material it is preferably from about 100 to about 160 g/m². The suitable upper limit also depends on which type of wood based material that is applied with the solution. The adhesive composition may be applied on one or both of the surfaces to be joined. If applied on both surfaces, the sum of the amounts applied on each surface will correspond to the preferred amounts for the whole glue joint specified.

In another embodiment, when manufacturing laminated products, the method suitably comprises application of the adhesive system according to the invention as separate components of the protein and the polymer (P) onto a surface. Suitably, both the protein and polymer (P) are applied as aqueous compositions. Alternatively, the protein and polymer (P) can be applied onto separate surfaces intended to be joined. Any optional one or more polymers (P1) are suitably applied as a separate component or as together with the protein. The total amount of applied adhesive system onto the one or both surfaces is such that the glue joint will comprise an originally applied amount of from about 0.1 to about 500 g/m². The applied amount depends on the product to be produced: for compression moulded veneers it is preferably from about 50 to about 200 g/m², for laminated flooring material it is preferably from about 100 to about 160 g/m². The suitable upper limit also depends on which type of wood based material that is applied with the solution.

In another embodiment, when manufacturing particle-, chip-, or fibre boards, the method suitably comprises application of the adhesive system according to the invention as separate components of the protein and the one or more polymers (P) onto the wood chips. The protein can be applied in dry form or as present in an aqueous composition. Preferably, the protein is applied in dry form. The one or more polymers (P) are suitably applied as an aqueous composition. Alternatively, the one or more polymers (P) are applied as a solid. The one or more polymers (P) are preferably first added to the chips followed by addition of the protein. If the one or more polymers (P) are solid and the protein is in dry form they may also be added as a mixture, preferably after water has been added to the wood chips, unless the wood chips used have a moisture content sufficient to achieve an acceptable bonding result.

The present invention also relates to a wood based product obtainable by the method of producing a wood based product.

The invention is further illustrated by means of the following non-limiting examples. Parts and percentages relate to parts by weight respectively percent by weight, unless otherwise stated.

### Examples

### Example 1:

Particle boards were manufactured by mixing 864 g wood chips, having a moisture content of 2 weight %, with increasing amounts of an aqueous solution of about 4 weight % (11 weight % including salts) polyvinyl amine (Lupamin® 9095 from Basf), followed by mixing in about 80 g of a protein respectively. Both soy protein isolate (Supro® 500E from Solae) and soy meal (Provabis® 200/80 from Cargil Foods) was used. The SPI had a protein content of >90 weight % and a dry content of 94 weight % and the soy meal had a protein content of 52-56 weight % and a dry content of 93-95 weight %. The chips mixture was formed into sheets of 30x30 cm and pressed at 185°C for three minutes and pressed into a board of 16 mm thickness. The sequence of pressure was 160 kg/cm² during 30 s, 40 kg/ cm² during 2.5 min and no pressure during the last 30 s. The tensile strength (internal bond, IB) was measured by gluing pieces of 5 x 5 cm onto two metal blocks and tear them apart. For the best IB-value also thickness swelling (TSW) and water absorption (ABS) was measured. Thickness swelling is measured by determining the degree of swelling after a piece of 5 x 5 cm has been immersed in water (20°C, 24 hrs). Water absorption is measured by determining the weight increase after a piece of 5 x 5 cm has been immersed in water (20°C, 24 hrs).

**Table 1.**

| Wood chips (g) | Protein | Protein (g) | Polyvinyl amine (11%), (g) | Moisture content before pressing (%) | IB (kPa) | TSW 24 h (%) | ABS 24 h (%) |
|---|---|---|---|---|---|---|---|
| 994 | SPI | 79.6 | - | 7.8 | 10 | - | - |
| 994 | SPI | 79.6 | 42.3 | 7.0 | 130 | - | - |
| 994 | SPI | 79.6 | 106.7 | 9.0 | 390 | 65.7 | 120.9 |
| 994 | soy meal | 80 | -- | 7.5 | 110 | - | - |
| 994 | soy meal | 80 | 43.2 | 7.2 | 260 | - | - |
| 994 | soy meal | 80 | 106.7 | 9.3 | 380 | 91.2 | 137.9 |

It is concluded that addition of polyvinylamine increases the internal bond strength.

### Example 2:

Particle boards were manufactured in a smaller scale by mixing 50.7 g wood chips respectively, having a moisture content of 2 weight %, with 10.9 g of an aqueous solution of about 4 weight % (11 weight % including salts) polyvinyl amine (Lupamin® 9095 from Basf), followed by mixing in about 5 g of a protein. As proteins a soy protein isolate (SPI) (Nurish® 1500 from Solae) having a protein content of >90 weight % and a dry content of about 94 weight %, a corn protein (Glutalys® from Roquette) having a protein content of about 57 weight % and a dry content of about 88 weight %, and a potato protein (Tubermine® from Roquette). The proteins were also tested without any amine- or amide-group-containing polymer, but with added water to achieve a moisture content before pressing for the chips mixture of 16.1 weight %. The chips mixtures were pressed into boards of 10 mm thickness. The pressing was made at 9 kg/cm² at 180-185°C during 5 minutes. The internal bond strength (IB) was measured by gluing pieces of 5 x 5 cm onto two metal blocks and tearing them apart.

**Table 2.**

| Wood chips (g) | Protein (g) | Polyvinyl amine (11%), (g) | Water (g) | Moisture content (%) | IB (kPa) |
|---|---|---|---|---|---|
| 50.7 | SPI | - | 9.5 | 16.1 | 97 |
| 50.7 | SPI | 10.9 | - | 16.1 | 387 |
| 50.7 | corn protein | - | 9.5 | 16.1 | 35 |
| 50.7 | corn protein | 10.9 | - | 16.1 | 293 |
| 50.7 | potato protein | - | 9.5 | 16.1 | 90 |
| 50.7 | potato protein | 10.9 | - | 16.1 | 247 |

It is concluded that the effect of addition of polyvinylamine is present for different types of proteins.

### Example 3:

Particle boards were manufactured by mixing 864 g wood chips, having a moisture content of 2 weight %, with 205 g of an aqueous solution of about 4 weight % (11 weight % including salts) polyvinyl amine (Lupamin® 9095 from Basf), followed by mixing in about 85 g of a protein. As proteins a soy protein isolate (Supro® 500E from Solae) having a protein content of >90 weight % and a dry content of 94 weight %, a corn protein (Glutalys® from Roquette) having a protein content of about 57 weight % and a dry content of about 88 weight % and a potato protein (Tubermine® from Roquette) having a protein content of 78 weight % and a dry content of 91 weight %, respectively were used. The moisture content of the chips mixture before pressing was determined. The chips mixtures were formed into sheets of 30x30 cm and pressed at 185°C for three minutes into boards of 16 mm thickness. The sequence of pressure was 160 kg/cm² during 30 s, 40 kg/ cm² during 2.5 min and no pressure during the last 30 s. The tensile strength (internal bond, IB) was measured as well as thickness swelling and water absorption.

**Table 3.**

| Wood chips (g) | Protein | Protein (g) | Polyvinyl amine (11%), (g) | Moisture content before pressing (%) | IB (kPa) | TSW 24 h (%) | ABS 24 h (%) |
|---|---|---|---|---|---|---|---|
| 864 | soy protein isolate | 85.3 | 205 | 16.5 | 880 | 15.8 | 83.2 |
| 864 | Corn protein | 85.3 | 205 | 16.6 | 470 | 22.3 | 94.0 |
| 864 | potato protein | 85.3 | 205 | 16.6 | 500 | 21.3 | 81.9 |

It is concluded the addition of polyvinylamine gives excellent internal bond strength and water resistance values for various protein types.

### Example 4:

Particle boards were manufactured in a smaller scale by mixing 50.7 g wood chips respectively, having a moisture content of 2 weight %, with 1.2 g of amine- or amide-group-containing polymers added as solutions having dry contents of between 10 and 20 weight %, followed by mixing in 5.0 g of soy protein isolate (Supro® 500E from Solae). The SPI had a protein content of >90 weight % and a dry content of 94 weight %. The chips mixtures were pressed into boards of 10 mm thickness. The pressing was made at 9 kg/cm² at 180-185°C during 5 minutes. The internal bond strength (IB) was measured by gluing pieces of 5 x 5 cm onto two metal blocks and tearing them apart.

**Table 4.**

| Wood chips (g) | Protein (g) | Polymer | Dry content of polymer solution (g) | IB (kPa) |
|---|---|---|---|---|
| 50.7 | - | Polyvinyl formamide¹ | 1.2 | 477 |
| 50.7 | 5.0 | Polyvinyl formamide¹ | 1.2 | 530 |
| 50.7 | - | Polyamine² | 1.2 | 258 |
| 50.7 | 5.0 | Polyamine² | 1.2 | 645 |
| 50.7 | - | Polyvinyl amine³ | 1.2 | 239 |
| 50.7 | 5.0 | Polyvinyl amine³ | 1.2 | 927 |
| 50.7 | - | Poly(vinyl alcohol-co-vinyl formamide)⁴ | 1.2 | 262 |
| 50.7 | 5.0 | Poly(vinyl alcohol-co-vinyl formamide)⁴ | 1.2 | 524 |
| 50.7 | - | Polyacryl amide⁵ | 1.2 | 154 |
| 50.7 | 5.0 | Polyacryl amide⁵ | 1.2 | 671 |
| 50.7 | - | Polyethylene imine⁶ | 1.2 | 536 |
| 50.7 | 5.0 | Polyethylene imine⁶ | 1.2 | 1236 |

| | | | | |
|---|---|---|---|---|
| ¹ Lupamin® 9000 (Basf), ² Lupasol® SC-86X (Basf), ³ Lupamin® 9095 (Basf), ⁴ M6i (Erkol), ⁵ Praestaret K325 (Basf), ⁶ PEI 25000 (Aldrich) | | | | |

Example 5: An adhesive composition was made by mixing 16 g of a soy protein isolate (Supro® 500E from Solae) and 100 g of an aqueous solution of about 7.5 weight % (22 weight % including salts) polyvinyl amine (Lupamin® 9095 from Basf). The SPI had a protein content of >90 weight % and a dry content of 94 weight %. The weight average molecular weight of the polyvinyl amine was 340.000 g/mol. As a reference 16 g of the same soy protein isolate (SPI) was mixed with 100 g of Milli-Q water. Veneered products were manufactured by gluing a 0.6 mm veneer of beech onto a particle board. The adhesive composition was applied onto a 15 x 15 cm particle in an amount of 120 g/m². The assembly was pressed during 2 minutes at 130°C. The gluing strength measured as fiber tear (chisel), the higher value the better) was measured 5, 30 and (only for SPI) 60 seconds and (only for SPI + polyvinylamine) as a cold assembly, respectively, after pressing.

**Table 5.**

| | Fiber tear, 5 s, (%) | Fiber tear, 30 s, (%) | Fiber tear, 60 s, (%) | Fiber tear, cold, (%) |
|---|---|---|---|---|
| SPI | 30 | 30 | 20 | * |
| SPI + polyvinylamine | 90 | 100 | * | 70 |

| | | | | |
|---|---|---|---|---|
| * not measured | | | | |

It is concluded that addition of polyvinyl amine increases the bond strength.

Example 6: An adhesive composition was made by mixing 36 g of a soy protein isolate (Supro® 500E from Solae) and 1.8 g of an aqueous solution of about 12.5 weight % a polyamineamide epichlorohydrin (PAAE) (Kymene® 557 from Hercules). The SPI had a protein content of >90 weight % and a dry content of 94 weight %. As a reference a composition of 12 g of the soy protein isolate in 100 ml water was used. The compositions were each applied onto 15 x 15 cm particle boards in an amount of 160 g/m². Veneers of beech (0.6 mm) were then pressed onto the boards. The assemblies were pressed during 1 minute at 130°C. The gluing strength measured as fiber tear (chisel) was measured on a warm assembly (directly after pressing) and on a cold assembly, respectively, after pressing.

**Table 6.**

| | Fiber tear, warm (%) | Fiber tear, cold (%) |
|---|---|---|
| SPI reference | 90 | 50 |
| SPI + PAAE | 50 | 20-30 |

It is concluded that the use of PAAE in combination with SPI has a negative impact on the the bond strength.

Example 7: An adhesive composition was made by mixing 8 g of a soy protein isolate (Supro® 500E from Solae) and 50 g of an aqueous solution of about 7.5 weight % (22 weight % including salts) polyvinyl amine (Lupamin® 9095 from Basf). The SPI had a protein content of >90 weight % and a dry content of 94 weight %. The weight average molecular weight of the polyvinyl amine was 340.000 g/mol. The adhesive composition was applied onto 15 x 15 cm particle boards in an amount of 120 g/m². The applied adhesive was allowed to dry for 5 days. The adhesive layers on two boards were then remoistened with 1.5 g water and 1.1 g of a solution (10 wt %) of acetoacetylated polyvinylalcohol (AAPVA) (Gohsefimer® Z-220 from Nippon Gohsei) respectively. Veneers of beech (0.6 mm) were then pressed onto the boards. The assemblies were pressed during 1 minute at 130°C. The gluing strength measured as fiber tear (chisel) was measured on a warm assembly (directly after pressing) and on a cold assembly, respectively, after pressing.

**Table 7.**

| | Fiber tear, warm (%) | Fiber tear, cold (%) |
|---|---|---|
| SPI + polyvinylamine | 100 | 60-70 |
| SPI + polyvinylamine + AAPVA | 100 | 100 |

It is concluded that addition of AAPVA further increases the bond strength.

Example 8: An adhesive composition was made by mixing 16 g of a soy protein isolate (Supro® 500E from solae) and 100 g of an aqueous solution of about 7.5 weight % (22 weight % including salts) polyvinyl amine (Lupamin® 9095 from BASF). The SPI had a protein content of >90 weight % and a dry content of 94 weight %. The weight average molecular weight of the polyvinyl amine was 340.000 g/mol. As a reference 16 g of the same soy protein isolate was mixed with 100 g of Milli-Q water. Flooring products for ANSI testing were manufactured by gluing a top layer of beech onto one side of a core material and a backing veneer onto the other. One assembly was pressed during 5 minutes at 90°C and another assembly was pressed during 5 minutes at 130°C. As a further reference the same type of flooring product was manufactured using an EPI (emulsion polymer isocyanate) adhesive system. The delamination according to ANSI was tested (1 cycle: 31x73 mm pieces, water soaking for 4 h at 24°C, drying in oven for 19 h at 50°C).

**Table 8.**

| | Delamination (%) | | | | | |
|---|---|---|---|---|---|---|
| Sample | After 1 cycle | | After 2 cycles | | After 3 cycles | |
| | Backing layer | Top layer | Backing layer | Top layer | Backing layer | Top layer |
| EPI ref. | 0 | 0 | 0.08 | 0 | 0.4 | 0 |
| SPI ref. 90°C | 32 | 0 | 69 | 7 | 90 | 21 |
| SPI + polyvinylamine, 90°C | 0.6 | 0 | 18 | 0 | 25 | 0.09 |
| SPI ref. 130°C | 2 | 0 | 77 | 0.5 | 91 | 0.8 |
| SPI + polyvinylamine, 130°C | 0 | 0 | 0.4 | 0 | 1 | 0 |

It is concluded that a performance equivalent to an EPI system can be achieved with the adhesive composition according to the present invention.

## Claims

1. Adhesive system, which functions as a wood adhesive, comprising a protein and one or more polymers (P) belonging to the group of polyvinyl amine, poly(vinylalcohol- co-vinylamine), poly(vinylalcohol- co-vinylformamide), polyallyl amine, polyethylene imine and polyvinyl formamide.

2. Adhesive system according to claim 1, wherein the weight ratio protein to the one or more polymers (P) in the adhesive system is from about 2:1 to about 10:1.

3. Adhesive system according to any one of claims 1-2, which comprises an adhesive composition.

4. Adhesive system according to claim 3, wherein the adhesive composition comprises from about 5 to about 50 weight % of protein.

5. Adhesive system according to any one of claims 3-4, wherein the adhesive composition comprises from about 5 to about 15 weight % of the one or more polymers (P).

6. Adhesive system according to any one of claims 1-2, which comprises the protein and the one or more polymers (P) as separate components.

7. Adhesive system according to claim 6, wherein the one or more polymers (P) are present in an aqueous composition comprising from about 2 to about 25 weight % of polymers (P).

8. Adhesive system according to any one of 1-6, wherein the one or more polymers (P) comprise vinyl polymers.

9. Adhesive system according to claim 8, wherein the one or more polymers (P) belong to the group of polyvinyl amine, poly(vinylalcohol- co-vinylamine), poly(vinylalcohol- co-vinylformamide), polyallyl amine, and polyvinyl formamide.

10. Adhesive system according to any one of 1-9, which comprises one or more polymers (P1) containing acetoacetoxy groups.

11. Adhesive system according to claim 10, wherein the one or more polymers (P1) comprise acetoacetylated polyvinylalcohol.

12. Method of producing a wood based product comprising providing an adhesive system according to any one of 1-11 onto one or more pieces of a wood-based material and joining the pieces with one or more further pieces of a material

13. Method according to claim 12, wherein the adhesive system is provided onto pieces of a wood-based material as an adhesive composition.

14. Method according to claim 13, wherein the adhesive composition is dried after application and later activated by adding water or an aqueous composition comprising the one or more polymers (P) or an aqueous composition comprising one or more polymers (P1) containing acetoacetoxy groups.

15. Method according to claim 12, wherein the adhesive system is provided onto pieces of a wood-based material as separate components, wherein one component comprises the protein and another component comprises the one or more polymers (P).

16. Method according to claim 15, wherein a first applied component comprises a solution or dispersion of the one or more polymers (P) and a second applied component comprises the protein either as a solution or dispersion, or as a dry material.

17. Method according to claim 15, wherein a first applied component comprises a solution or dispersion of the protein and a second applied component comprises a solution or dispersion of the one or more polymers (P).

18. Method according to any one of claims 16-17, wherein the first component applied is dried after application before the second component is applied

19. Method according to claim 15, wherein a first applied component comprises a protein as a dry material, and the second component applied comprises a solution or dispersion of the one or more polymers (P).

20. Method according to any one of claims 12-19, wherein the adhesive system comprises the one or more polymers (P1) as a separate component.

21. Method according to any one of claims 14 or 20, wherein the one or more polymers (P1) comprise acetoacetylated polyvinyl alcohol.

22. Method according to any one of claims 12-21, wherein the pieces are sheets or lamellas.

23. Method according to claim 22, wherein the wood based product is a laminated flooring material.

24. Method according to any one of claims 12-21, wherein the pieces are wood chips or wood particles.

25. Method according to claim 24, wherein the wood based product is a chip-, particle- or fibre board.

26. Wood based product obtainable by the method according to any one of claims 12-25.

27. Use of the adhesive system according to any one of claims 1-11 for gluing pieces of wood based materials forming a wood based product.

## Patentansprüche

1. Klebstoffsystem, das als Holzklebstoff fungiert, umfassend ein Protein und eines oder mehrere Polymere (P), die zu der Gruppe von Polyvinylamin, Poly(vinylalkohol-co-vinylamin), Poly(vinylalkohol-co-vinylformamid), Polyallylamin, Polyethylenimin und Polyvinylformamid gehören.

2. Klebstoffsystem nach Anspruch 1, wobei das Gewichtsverhältnis von Protein zu dem einen oder mehreren Polymeren (P) in dem Klebstoffsystem von etwa 2:1 bis etwa 10:1 liegt.

3. Klebstoffsystem nach einem der Ansprüche 1-2, das eine Klebstoffzusammensetzung umfasst.

4. Klebstoffsystem nach Anspruch 3, wobei die Klebstoffzusammensetzung von etwa 5 bis etwa 50 Gew.% Protein umfasst.

5. Klebstoffsystem nach einem der Ansprüche 3-4, wobei die Klebstoffzusammensetzung von etwa 5 bis etwa 15 Gew.% des einen oder mehrerer Polymere (P) umfasst.

6. Klebstoffsystem nach einem der Ansprüche 1-2, das das Protein und das eine oder mehrere Polymere (P) als separate Komponenten umfasst.

7. Klebstoffsystem nach Anspruch 6, wobei das eine oder mehrere Polymere (P) in einer wässrigen Zusammensetzung, umfassend von etwa 2 bis etwa 25 Gew.% Polymere (P), vorhanden sind.

8. Klebstoffsystem nach einem der Ansprüche 1-6, wobei das eine oder mehrere Polymere (P) Vinylpolymere umfassen.

9. Klebstoffsystem nach Anspruch 8, wobei das eine oder mehrere Polymere (P) zu der Gruppe von Polyvinylamin, Poly(vinylalkohol-co-vinylamin), Poly(vinylalkohol-co-vinylformamid), Polyallylamin und Polyvinylformamid gehören.

10. Klebstoffsystem nach einem der Ansprüche 1-9, das eines oder mehrere Polymere (P1) umfasst, die Acetoacetoxygruppen enthalten.

11. Klebstoffsystem nach Anspruch 10, wobei das eine oder mehrere Polymere (P1) acetoacetylierten Polyvinylalkohol umfassen.

12. Verfahren zur Herstellung eines holzbasierten Produktes umfassend das Bereitstellen eines Klebstoffsystems nach einem der Ansprüche 1-11 auf einem oder mehreren Stücken eines holzbasierten Materials und das Zusammenfügen der Stücke mit einem oder mehreren weiteren Stücken eines Materials.

13. Verfahren nach Anspruch 12, wobei das Klebstoffsystem auf Stücken eines holzbasierten Materials als Klebstoffzusammensetzung bereitgestellt ist.

14. Verfahren nach Anspruch 13, wobei die Klebstoffzusammensetzung nach dem Auftragen getrocknet und später aktiviert wird durch Hinzufügen von Wasser oder einer wässrigen Zusammensetzung umfassend das eine oder mehrere Polymere (P) oder einer wässrigen Zusammensetzung umfassend das eine oder mehrere Polymere (P1) enthaltend Acetoacetoxygruppen.

15. Verfahren nach Anspruch 12, wobei das Klebstoffsystem auf Stücken eines holzbasierten Materials als separate Komponenten bereitgestellt ist, wobei eine Komponente das Protein umfasst und eine andere Komponente das eine oder mehrere Polymere (P) umfasst.

16. Verfahren nach Anspruch 15, wobei eine erste aufgetragene Komponente eine Lösung oder Dispersion des einen oder mehrerer Polymere (P) umfasst und eine zweite aufgetragene Komponente das Protein entweder als Lösung oder Dispersion oder als trockenes Material umfasst.

17. Verfahren nach Anspruch 15, wobei eine erste aufgetragene Komponente eine Lösung oder Dispersion des Proteins umfasst und eine zweite aufgetragene Komponente eine Lösung oder Dispersion des einen oder mehrerer Polymere (P) umfasst.

18. Verfahren nach einem der Ansprüche 16-17, wobei die erste aufgetragene Komponente nach dem Auftragen getrocknet wird, bevor die zweite Komponente aufgetragen wird.

19. Verfahren nach Anspruch 15, wobei eine erste aufgetragene Komponente ein Protein als trockenes Material umfasst, und die zweite aufgetragene Komponente eine Lösung oder Dispersion des einen oder mehrerer Polymere (P) umfasst.

20. Verfahren nach einem der Ansprüche 12-19, wobei das Klebstoffsystem das eine oder mehrere Polymere (P1) als separate Komponente umfasst.

21. Verfahren nach einem der Ansprüche 14 oder 20, wobei das eine oder mehrere Polymere (P1) acetoacetylierten Polyvinylalkohol umfassen.

22. Verfahren nach einem der Ansprüche 12-21, wobei die Stücke Platten oder Lamellen sind.

23. Verfahren nach Anspruch 22, wobei das holzbasierte Produkt ein Laminatfußbodenmaterial ist.

24. Verfahren nach einem der Ansprüche 12-21, wobei die Stücke Holzschnitzel oder Holzpartikel sind.

25. Verfahren nach Anspruch 24, wobei das holzbasierte Produkt eine Spanplatte, eine Pressspanplatte oder eine Faserplatte ist.

26. Holzbasiertes Produkt, erhältlich durch das Verfahren nach einem der Ansprüche 12-25.

27. Verwendung des Klebstoffsystems nach einem der Ansprüche 1-11 zum Verkleben von Stücken aus holzbasierten Materialien, die ein holzbasiertes Produkt bilden.

## Revendications

1. Système adhésif, qui fonctionne comme un adhésif à bois, comprenant une protéine et un ou plusieurs polymère(s) (P) appartenant au groupe constitué de polyvinylamine, de poly(vinylalcool-co-vinylamine), de poly(vinylalcool-co-vinylformamide), de polyallylamine, de polyéthylèneimine et de polyvinylformamide.

2. Système adhésif selon la revendication 1, dans lequel le rapport pondéral de la protéine sur le ou les plusieurs polymère(s) (P) dans le système adhésif est d'environ 2:1 à environ 10:1.

3. Système adhésif selon l'une quelconque des revendications 1 et 2, qui comprend une composition adhésive.

4. Système adhésif selon la revendication 3, dans lequel la composition adhésive comprend environ 5 à environ 50% en poids de protéine.

5. Système adhésif selon l'une quelconque des revendications 3 et 4, dans lequel la composition adhésive comprend environ 5 à environ 15% en poids du ou des plusieurs polymère(s) (P).

6. Système adhésif selon l'une quelconque des revendications 1 et 2, qui comprend la protéine et le ou les plusieurs polymère(s) (P) en tant que composants séparés.

7. Système adhésif selon la revendication 6, dans lequel le ou les plusieurs polymère(s) (P) sont présents dans une composition aqueuse comprenant environ 2 à environ 25% en poids de polymères (P).

8. Système adhésif selon l'une quelconque des revendications 1 à 6, dans lequel le ou les plusieurs polymère(s) (P) comprennent des polymères vinyliques.

9. Système adhésif selon la revendication 8, dans lequel le ou les plusieurs polymère(s) (P) appartiennent au groupe constitué de polyvinylamine, de poly(vinylalcool-co-vinylamine), de poly(vinylalcool-co-vinylformamide), de polyallylamine, de polyéthylèneimine et de polyvinylformamide.

10. Système adhésif selon l'une quelconque des revendications 1 à 9, qui comprend un ou plusieurs polymère(s) (P1) contenant des groupes acétoacétoxy.

11. Système adhésif selon la revendication 10, dans lequel le ou les plusieurs polymère(s) (P1) comprennent l'alcool polyvinylique acétoacétylé.

12. Procédé de production d'un produit à base de bois comprenant le fait de fournir un système adhésif selon l'une quelconque des revendications 1 à 11 sur une ou plusieurs pièce(s) d'un matériau à base de bois et d'assembler les pièces avec une ou plusieurs autre(s) pièce(s) d'un matériau.

13. Procédé selon la revendication 12, dans lequel le système adhésif est fourni sur des pièces d'un matériau à base de bois sous forme de composition adhésive.

14. Procédé selon la revendication 13, dans lequel la composition adhésive est séchée après application et activée ultérieurement en ajoutant de l'eau ou une composition aqueuse comprenant le ou les plusieurs polymère(s) (P) ou une composition aqueuse comprenant un ou plusieurs polymère(s) (P1) contenant des groupes acétoacétoxy.

15. Procédé selon la revendication 12, dans lequel le système adhésif est fourni sur des pièces d'un matériau à base de bois sous forme de composants séparés, dans lequel un composant comprend la protéine et un autre composant comprend le ou les plusieurs polymère(s) (P).

16. Procédé selon la revendication 15, dans lequel un premier composant appliqué comprend une solution ou une dispersion du ou des plusieurs polymère(s) (P) et un deuxième composant appliqué comprend la protéine soit sous forme de solution ou de dispersion, ou sous forme de matière sèche.

17. Procédé selon la revendication 15, dans lequel un premier composant appliqué comprend une solution ou une dispersion de la protéine et un deuxième composant appliqué comprend une solution ou une dispersion du ou des plusieurs polymère(s) (P).

18. Procédé selon l'une quelconque des revendications 16 et 17, dans lequel le premier composant appliqué est séché après application avant que le deuxième composant ne soit appliqué.

19. Procédé selon la revendication 15, dans lequel un premier composant appliqué comprend une protéine sous forme de matière sèche, et le deuxième composant appliqué comprend une solution ou une dispersion du ou des plusieurs polymère(s) (P).

20. Procédé selon l'une quelconque des revendications 12 à 19, dans lequel le système adhésif comprend le ou les plusieurs polymère(s) (P1) en tant que composant séparé.

21. Procédé selon l'une quelconque des revendications 14 ou 20, dans lequel le ou les plusieurs polymère(s) (P1) comprend/comprennent l'alcool polyvinylique acétoacétylé.

22. Procédé selon l'une quelconque des revendications 12 à 21, dans lequel les pièces sont des feuilles ou des lamelles.

23. Procédé selon la revendication 22, dans lequel le produit à base de bois est un matériau de revêtement de sol stratifié.

24. Procédé selon l'une quelconque des revendications 12 à 21, dans lequel les pièces sont des copeaux de bois ou des particules de bois.

25. Procédé selon la revendication 24, dans lequel le produit à base de bois est un panneau de copeaux, de particules ou de fibres.

26. Produit à base de bois pouvant être obtenu par le procédé selon l'une quelconque des revendications 12 à 25.

27. Utilisation du système adhésif selon l'une quelconque des revendications 1 à 11 pour coller des pièces de matériaux à base de bois afin de former un produit à base de bois.
